# EUROPEAN PATENT SPECIFICATION

(11) **EP 2 056 536 B1**
(45) Date of publication and mention of the grant of the patent: **25.01.2012**
(21) Application number: 07785297.8
(22) Date of filing: 09.08.2007
(51) Int. Cl.: H04L 12/50

(54) **A METHOD, A SYSTEM AND A SERVICE CONTROL POINT FOR PROVIDING CIRCUIT DOMAIN SERVICE**
VERFAHREN, SYSTEM UND DIENSTSTEUERPUNKT ZUR BEREITSTELLUNG EINES LEITUNGSDOMÄNENDIENSTES
PROCÉDÉ, SYSTÈME ET POINT DE COMMANDE DE SERVICE POUR FOURNIR UN SERVICE DE DOMAINE DE CIRCUIT

(30) Priority: 17.08.2006 CN 200610111254; 28.09.2006 CN 200610141030
(43) Date of publication of application: 06.05.2009
(73) Proprietor: Huawei Technologies Co., Ltd., Longgang District, Shenzhen Guangdong 518129 (CN)
(72) Inventor: ZHU, Dongming, Guangdong 518129 (CN); XU, Jie, Guangdong 518129 (CN)
(74) Representative: Gulde Hengelhaupt Ziebig & Schneider
(86) International application number: PCT/CN2007/002390
(87) International publication number: WO 2008/022536

(56) References cited:
- CN-A- 1 501 606
- CN-A- 1 581 997
- CN-A- 1 773 967
- CN-A- 1 816 022
- US-A1- 2003 026 245
- US-A1- 2004 209 650

## Description

### FIELD OF THE INVENTION

The present invention relates to communication field, more particularly, relates to a method, system and service control point for providing Circuit Switched (CS) domain service.

### BACKGROUND

During the evolution of wireless networks from 2G networks to 3G networks, the 2G networks and 3G networks will coexist for quite a long time. In such a case that two kinds of networks coexist simultaneously, a network shall be aware of the registration situation of a user terminal in both networks, so that a suitable network can be selected to connect a user terminal when a call requires such a connection. Furthermore, the network also needs to anchor all of the calls of a user terminal so as to facilitate auxiliary control when the user terminal switches between two networks.

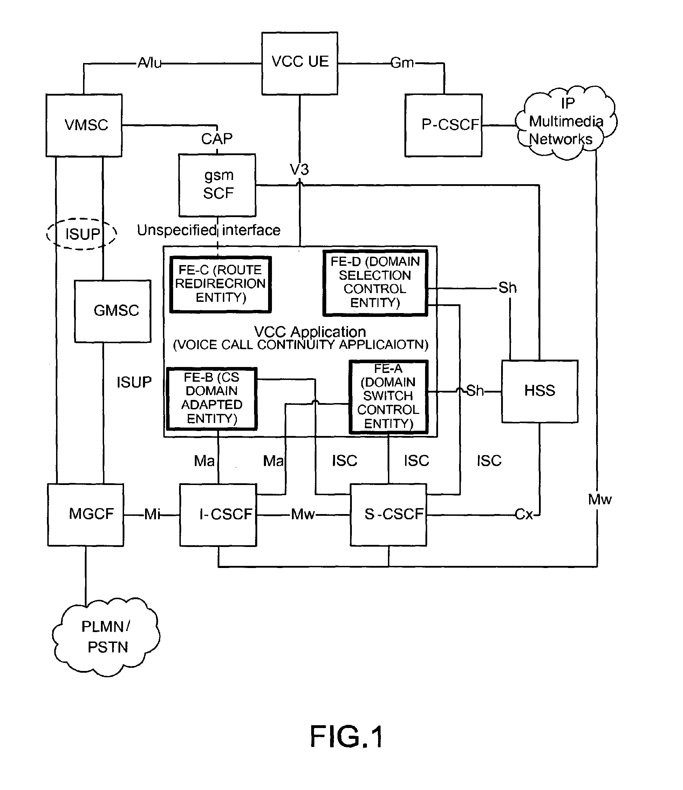

Recently, 3GPP and 3GPP2 Standard Organization proposes a solution for implementing dual-network interaction based on IP Multimedia Subsystem (IMS). The solution can detect registration situation and session state of a user terminal respectively in both networks and perform route and switch control of the user terminal based on the registration situation and session status of the user terminal. The solution is implemented based on the network infrastructure shown in Fig. 1, and the network includes a Voice Call Continuity Application (VCC Application) Service Control Entity. The VCC Service Control Entity includes a set of new functional entities, as follows:

1. FE-C (route redirection entity), configured to redirect a CS domain call to a Packet Switched (PS) domain, such as an IMS domain to perform call anchor control. The FE-C is typically set together with the GSM System Intelligent Service Control Functional Entity (gsmSCF) and is represented as a Service Control Point (SCP) in the CS domain.

2. FE-B (CS domain adapted entity), configured to receive the CS domain call redirected to the IMS domain and transform the call to be an IMS domain call.

3. FE-D (domain selection control entity), configured to make a decision in the PS domain, such as the IMS domain based on information such as registration situation and call status of the subscriber, and control call route to a selected connection domain based on result of the decision.

4. FE-A (domain switch control entity), configured to anchor the call in the PS domain, such as the IMS domain and perform switch control when a switch occurs.

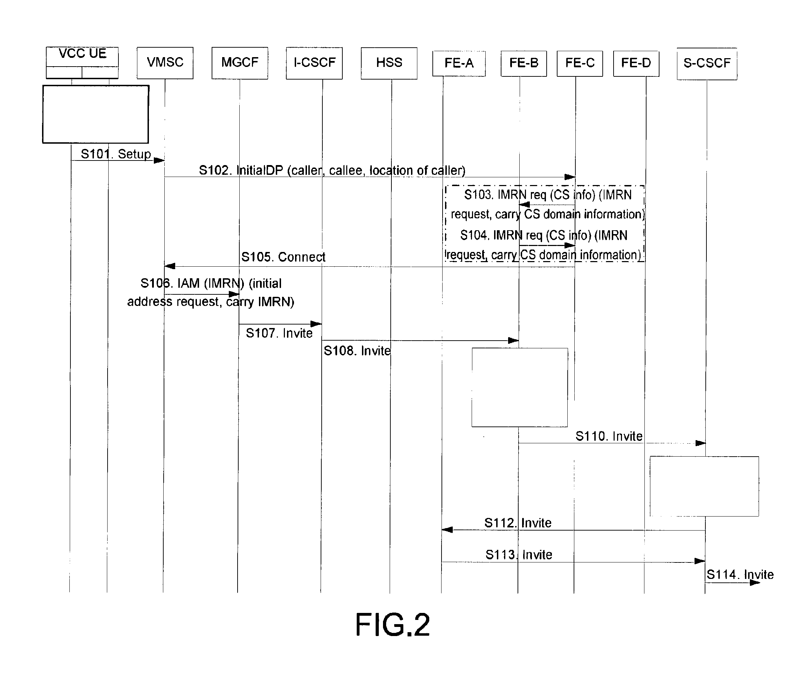

Based on the above network infrastructure, when a subscriber initiates a call in a CS domain via a Voice Call Continuity User Entity (VCC UE, also called VCC Terminal), the call will be routed to a PS domain that the subscriber belongs to and be service controlled by an IMS domain entity within the PS domain. The route can be based on an intelligent number redirection process, as shown in Fig. 2, the main concept of the intelligent number redirection process is as follows:

A user terminal initiates a call in a Circuit Switch (CS) domain and the number of the called party is the number of the opposite terminal. A Visited Mobile Switching Center (VMSC) receives a request of the call and initiates an Initial Detect Point (IDP) message to the route redirection entity FE-C based on an intelligent trigger that the subscriber subscribes to. The FE-C returns IMS Routing Number (IMRN) to the VMSC. The VMSC routes the call to a Media Gateway Control Function (MGCF) in the IMS domain based on the IMS Routing Number. The MGCF constructs a Session Initiation Protocol (SIP) INVITE message and sends it to an Interrogating Call Session Control Function (I-CSCF) entity of the IMS domain that the subscriber belongs to, the address of the called party carried in the INVITE is IMRN. The I-CSCF entity detects that the address of the called party is IMRN based on the SIP INVITE message, uses it as a Public Service Identity (PSI) of the session and routes the session to a CS domain adapted entity. The CS domain adapted entity FE-B searches for the initial number of the called party by using the IMRN. The CS domain adapted entity FE-B uses Back to Back User Agent (B2BUA) to initiate a new session to a Serving CSCF (S-CSCF) in the IMS domain in place of the user terminal, the identifier of the called party side in the session is the initial number of the called party. The S-CSCF triggers the session to the domain switch control entity FE-A via initial Filter Criteria (iFC). The FE-A sends a session request to the S-CSCF after an anchor control is performed. The S-CSCF sends the session request to the subsequent processing entities.

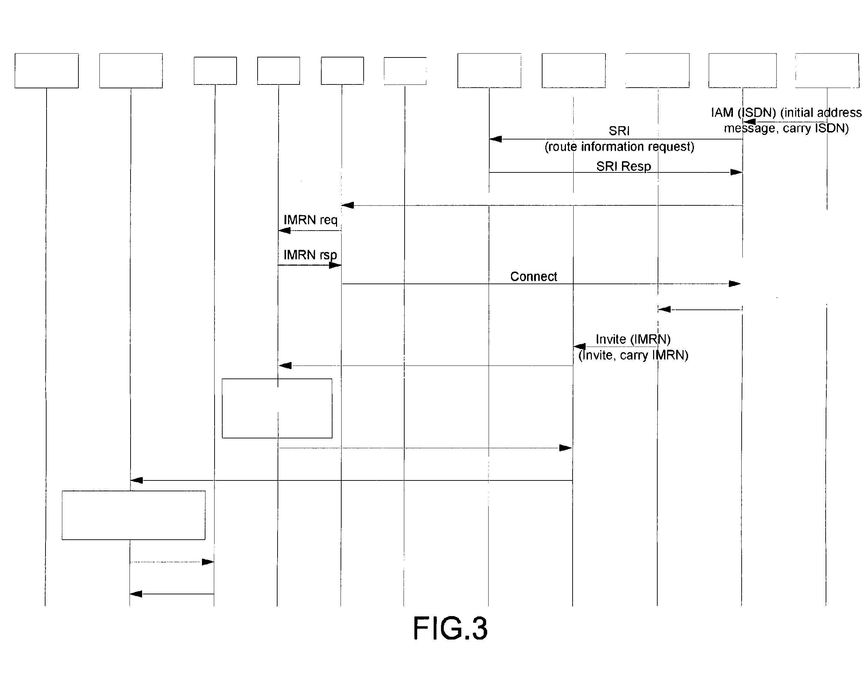

Based on the above network infrastructure, the process of a dual-mode subscriber performing redirection and anchor in the CS domain after receiving a call is shown in Fig. 3, the main concept of the process is as follows:

A CS domain Gateway Mobile Switching Center (GMSC) receives a call request to a dual-mode user terminal. The GMSC requests subscriber intelligent information from a Home Subscriber Server (HSS) that the user terminal belongs to, and triggers the call to the route redirection entity FE-C based on subscriber intelligent trigger data that is acquired. The FE-C returns the acquired IMRN to the GMSC and indicates the GMSC to redirect the call to the IMS domain. The GMSC routes the call to an entrance network cell MGCF of the IMS domain based on the IMRN. The MGCF constructs a SIP session using the IMRN and sends it to the I-CSCF. The I-CSCF routes the session to the FE-B via PSI. The FE-B searches for session information, mainly the initial number of the called party that is stored previously via IMRN, and initiates a new SIP session using the initial number of the called party via B2BUA in place of the calling party. When the I-CSCF receives the new SIP session, it obtains the S-CSCF that the called party belongs to by inquiring to the HSS and routes the session to the S-CSCF. The S-CSCF triggers the session to the FE-A via iFC trigger to perform anchor control. After the FE-A performs the anchor control, it sends back a response message to the S-CSCF.

The calling party process and called party process of redirecting a CS call to the IMS domain is introduced above. When the CS call is redirected to the IMS domain, except for the service continuity function, the IMS domain may provide control for some other services to the subscriber, such as some supplementary services of the CS domain, for example, Call Barring (CB) Service and Call Forwarding (CF) Service. When the IMS domain provides CS domain supplementary services to the subscriber, the original CS supplementary services of the subscriber shall be disabled so as to avoid potential logical errors, for example, supplementary service subscription data of the subscriber will not be downloaded to the Mobile Switching Center (MSC) / Visitor Location Register (VLR) of the visited network.

Based on the above process, it is implemented that the call occurring in the CS domain be routed to the IMS domain for controlling and processing. However, on one hand, such a process results alternate routes and affects the connection speed; on the other hand, such a process brings meaningless transformation between carrier types, such as a transformation between Internet Protocol (IP) and Time Division Multiplexing (TDM). Furthermore, a network may make a decision that temporarily it is not needed to provide service continuity function to a subscriber by considering the following reasons: the subscriber is roaming, there is no other network existing near the location of the subscriber, the subscriber changes its terminal. Then it is not needed to route the CS call to the IMS domain, or to perform the above route redirection for the call.

A prior art that is related to the present invention provides several methods for temporarily denying route redirection to IMS domain for a subscriber CS call.

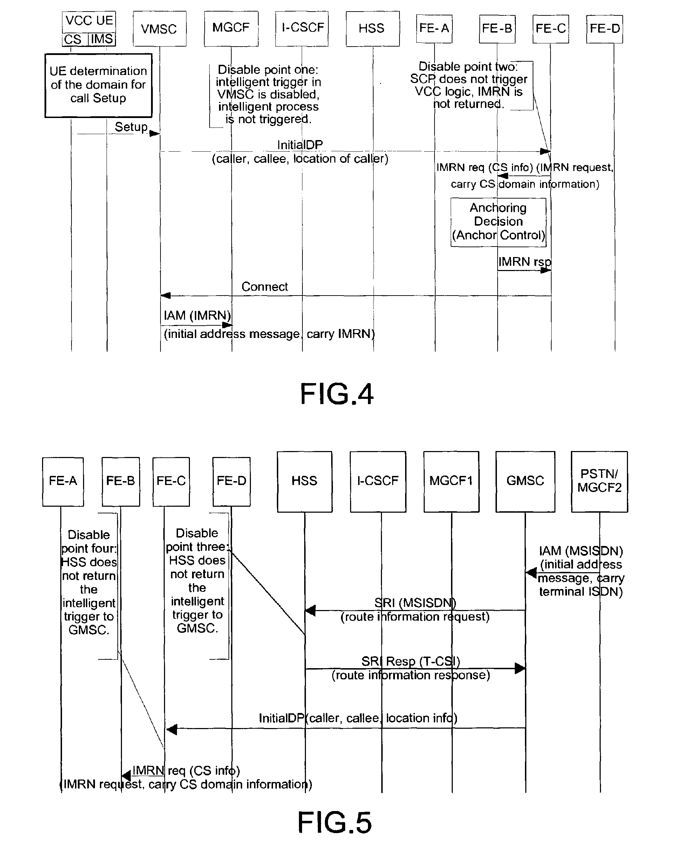

The first method is to temporarily disable intelligent process of a visited network MSC at disable point one in Fig. 4, then the intelligent process to FE-C will not be triggered and the subsequent number redirection does not exist.

The second method for disabling call redirection during a call process is to process at disable point two in Fig. 4, that is, to process in SCP. When an SCP receives a call request, a decision on whether to provide service continuity is made based on information carried in the call request or other reference information. If the decision is temporarily not to provide service continuity function to the subscriber, the redirected number is not returned.

The third method for disabling call redirection during a call process is to process at disable point three in Fig. 5, that is, to process in HSS/ Home Location Register (HLR). When an HSS/HLR receives a call request, and makes a decision that temporarily denies providing service continuity function to the subscriber, the intelligent trigger data of the subscriber is not returned and the gateway station will not trigger the call to the SCP.

The fourth method for disabling call redirection during a call process is to process at disable point four in Fig. 5, that is, to process in FE-C. When a FE-C receives a call request and a result of a decision that is not to provide service continuity function to the subscriber, the redirected number is not returned.

It can be seen from the above description that, the prior art can implement not to redirect a CS call to the IMS domain. However, because some CS domain supplementary services, such as CB, CF shall be provided by the IMS after a CS call is redirected to the IMS. When the CS call is not redirected to the IMS, the CS domain supplementary services cannot be provided continuously for the subscriber if no special process is performed.

Additionally, in current CS domain, subscription data of the subscriber can be acquired via MSCNLR entity, and a decision can be made based on the acquired subscription data so as to determine whether to provide CS domain call restriction service to the subscriber. However, subscriber services processed in MSC/VLR are only CS domain services, if SCP is used for processing subscriber CS domain supplementary services, subscriber services in both PS domain and CS domain can be processed together, but no solution is proposed for processing subscriber services by using SCP. Furthermore, in a solution that two networks coexist simultaneously, MSC/VLR does not process CS domain supplementary services, MSC/VLR redirects a call to the IMS domain and corresponding entities in the IMS domain provide such services. But it is very difficult to find reference information such as the location of the subscriber in CS domain in the IMS domain, then the supplementary services such as call restriction service to the subscriber.
US 2004/209650 A1 discloses methods and apparatus for providing restrictions on long distance calls from wireless communication devices which operate in a wireless communication network.

### SUMMARY

An embodiment of the present invention provides a method and system for providing CS domain service. According to embodiments of the present invention, subscription data is acquired via SCP, and circuit service domain is provided based on acquired information, such as the acquired subscription data and reference location of the subscriber in CS domain. Then services such as originating call restriction service can be provided by SCP when MSCNLR does not provide CS domain supplementary service.

An embodiment of the present invention provides another method and system for providing CS domain service. According to embodiments of the present invention, original CS domain supplementary service is continuously provided to the subscriber when service continuity function of redirecting a CS call to the IMS domain for the subscriber is disabled due to some reasons.

Embodiments of the present invention are implemented as follows:

Embodiments of the present invention provide a method for providing CS domain service including acquiring, by an execution entity that provides CS domain service in a network, a result of a decision; and providing CS domain services to the subscriber in the CS domain when the execution entity detects that the acquired result includes an indication of denying controlling circuit domain service of the subscriber in a packet domain, and when the execution entity that provides CS domain services is located in HSS or HLR, the method further includes:
downloading CS domain supplementary service (SS) data of the subscriber to a Visited network Mobile Switch Center (VMSC) or a Visitor Location Register (VLR) when the HSS/HLR receives a registration signaling and acquires a result of a decision indicative of denying providing circuit domain service control for the subscriber in packet domain, during registration of a subscriber; or
downloading CS domain SS data of the subscriber to the VMSC or VLR when the HSS/HLR is aware of a change of a result of a decision and thereby determines that the network denies providing circuit domain service control for the subscriber in packet domain, after registration of the subscriber..

Embodiments of the present invention provide another method for providing CS domain service including: a service control point (SCP) in a network acquires subscription data, and performs CS domain call restriction service when the SCP confirms that the CS domain call restriction service shall be provided based on the acquired subscription data.

Embodiments of the present invention provide a system for providing CS domain service including a decision result acquiring unit, configured to acquire a result of a decision and forward the result of the decision to a first execution unit that provides CS domain service; and a first execution unit that provides CS domain service, configured to determine whether the acquired result includes an indication of denying controlling circuit service of the subscriber in a packet domain, and provide CS domain service to the subscriber if it is determined that the indication of denying controlling circuit service of the subscriber in the packet domain is included, when the first execution unit that provides CS domain service is located in HSS or HLR, the first execution unit that provides CS domain service further includes: a first execution subunit, configured to:
download CS domain supplementary service subscription data of a user terminal to a Visited Mobile Switch Center (VMSC) or Visitor Location Register (VLR) when the HSS/HLR receives a registration signaling of the subscriber and determines that a result of decision includes an indication of denying performing circuit domain service control in packet domain for the user; or
download CS domain supplementary service subscription data of a subscriber to the VMSC/VLR, after a registration of the subscriber, when the HSS or HLR is aware of a change of a result of a decision and determines that the network denies providing circuit domain service control to the subscriber in packet domain based on information about the change of result of the decision.

Embodiments of the present invention provide a service control point for providing CS domain service including: a subscription data acquiring unit, configured to acquire subscription data of a subscriber; and a second execution unit that provides CS domain service, configured to perform CS domain call restriction service when it is confirmed that the CS domain call restriction service shall be provided based on the acquired subscription data.

It can be seen from embodiments of the present invention that an execution entity that provides CS domain service in a network acquires a result of a decision, and re-provides original CS domain service to the subscriber when the execution entity detects that the acquired result includes a message indicative of denying controlling circuit service of the subscriber in a PS domain. Then the original CS domain service can be provided to the subscriber in continuity when service continuity function for the subscriber is disabled due to some reasons, and the problem existing in prior art that original CS domain supplementary service cannot be provided in continuity to the subscriber when service continuity function of redirecting a CS call to the IMS domain for the subscriber is disabled due to some reasons, is solved.

### BRIEF DESCRIPTION OF THE DRAWINGS

Fig. 1 illustrates a conventional network infrastructure that implements dual-network interaction based on IMS entity;

Fig. 2 illustrates a conventional flowchart that a subscriber implements intelligent number redirection via VCC UE;

Fig. 3 illustrates a conventional flowchart of a process that a dual-mode user terminal performs redirection and anchor after receiving a call in CS domain;

Fig. 4 is a conventional schematic diagram shows a first location of disabling call redirection during a call process;

Fig. 5 is a conventional schematic diagram shows a second location of disabling call redirection during a call process;

Fig. 6 illustrates a flowchart according to a first embodiment of the present invention;

Fig. 7 illustrates a flowchart according to a second embodiment of the present invention;

Fig.8 illustrates a flowchart of a process that partially downloads CS domain supplementary service subscription data of a subscriber to MSC/VLR, according to an embodiment of the present invention;

Fig. 9 illustrates a flowchart according to a third embodiment of the present invention;

Fig. 10 illustrates a flowchart according to a fourth embodiment of the present invention;

Fig. 11 illustrates a flowchart according to a fifth embodiment of the present invention;

Fig. 12 illustrates a flowchart according to a sixth embodiment of the present invention;

Fig. 13 illustrates a flowchart according to an eighth embodiment of the present invention;

Fig. 14 illustrates a flowchart according to a tenth embodiment of the present invention;

Fig. 15 illustrates a flowchart according to a twelfth embodiment of the present invention.

### DETAILED DESCRIPTION

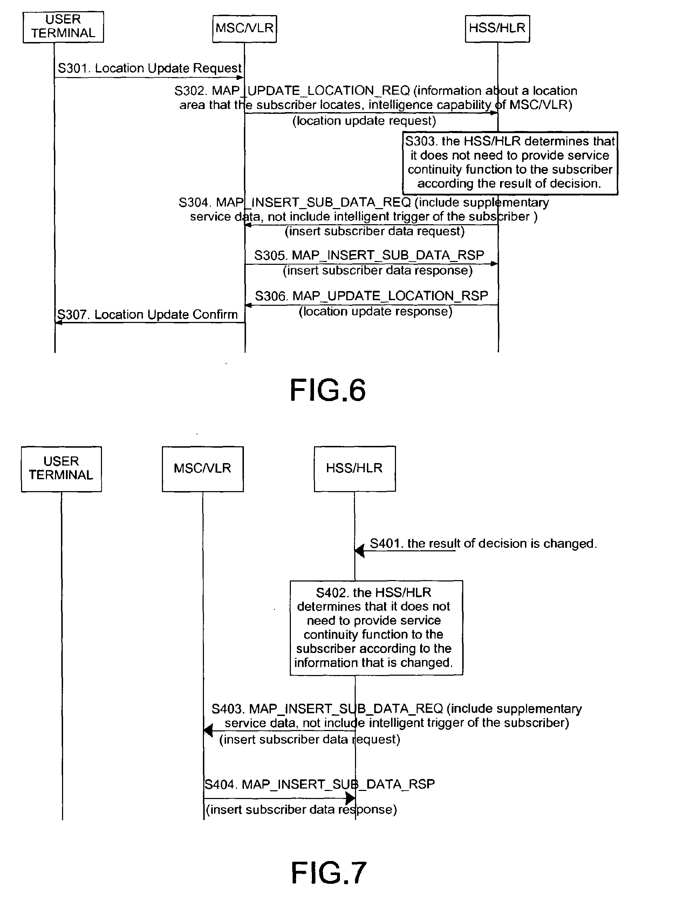

A first embodiment of the present invention provides a first method for providing CS domain service. According to this method, during registration of a subscriber, when an HSS/HLR receives a registration signaling, the HSS/HLR does not return intelligent subscription data in the VMSCNLR of the visited network according to a result of a decision that is to not to provide service continuity function to the subscriber. Meanwhile, CS domain supplementary service subscription data is downloaded to the VMSCNLR. Detailed implementation process is shown in Fig. 6, including the following steps:

In Step S301, a user terminal powers on or moves to an area that an MSCNLR belongs to, and then initiates a location update request message to the MSCNLR.

In Step S302, the MSCNLR sends a MAP_UPDATE_LOCATION_REQ (location update request) message to an HSS/HLR, the massage includes information about a location area that the subscriber locates in and/or reference information such as ability of the MSCNLR to support an intelligent network.

In Step S303, the HSS/HLR acquires a result of a decision indicative of denying providing service continuity function for the subscriber.

The manner for acquiring the result of the decision includes the following two conditions:

1. A decision-making entity in the network, such as an AS, makes the decision based on the reference information, and forwards the result of the decision to the HSS/HLR, which is an execution unit that provides CS domain service;

2. The execution unit HSS/HLR, which provides CS domain service, makes the decision based on multifarious reference information and obtains a corresponding result.

The multifarious reference information includes personal preference of a subscriber, operator policy, roaming status of the subscriber, current location of a user terminal, intelligent processing ability of a visited network of a subscriber, and/or user terminal ability information. The multifarious reference information is acquired via a received registration signaling and/or a received call control signaling; or the reference information is acquired by interacting with an information providing entity in the network.

In Step S304, the HSS/HLR inserts subscription data to the MSCNLR, and the subscription data does not include intelligent subscription data, but includes all CS domain supplementary service subscription data that the subscriber subscribes to.

The CS domain supplementary service subscription data includes Call Forwarding Service, Number Displaying Service, Originating Call Restriction Service, Call Waiting Service, Call Holding Service, Explicit Communication Transfer Service Information, Multiple Party Service, and/or Data Service Information.

In Step S305, the MSCNLR returns an inserted subscription data response message to the HSS/HLR; the carried subscription data includes the parameters such as Forwarding information List, Call Barring information List, CUG information List, SS-Data List, eMLPP Subscription Data.

In Step S306, the HSSNLR returns a registration receipt response message to the MSCNLR.

In Step S307, the MSCNLR returns a location update receipt message to the user terminal.

The above descriptions are illustrated by taking Global System for Mobile Communications (GSM) / Wide-band Code Division Multiple Access (WCDMA) as an example, if it is applied to a CDMA2000 system, the following adjustments shall be performed:

1. The message in step S302 is Registration Notification or Qualification Request Signaling of Code Division Multiple Addressing (CDMA) 2000.

2. Steps S304 and S305 are omitted, and subscription data is carried directly in the response message in step S306. In CDMA2000, the response message of step S306 is Registration Notification Return Result message or Qualification Request Return Result message, the carried subscription data includes parameters as Calling Feature Indicator, Origination Indicator, and Termination Restriction Code, etc.

This embodiment is illustrated by taking as an example the condition that the result of the decision is indicative of denying providing service continuity function for the subscriber. However, embodiments of the present invention are not limited thereto, the method introduced in the present embodiment can also be applied to the condition that the result of the decision determines to provide the service in CS domain or in PS domain, or the condition that the result of the decision determines whether to perform centralized service control for the subscriber in PS domain. The following embodiments are similar.

A second embodiment of the present invention provides a second method for providing CS domain service. According to this method, after registration of a subscriber, if an HSS/HLR is aware of a change of a result of a decision, and determines that the network will temporarily not provide service continuity function for the subscriber at some time, the HSS/HLR deletes intelligent subscription data in the VMSC/VLR of the visited network. Meanwhile, CS domain supplementary service subscription data is downloaded to the VMSC/VLR. Detailed implementation process is shown in Fig. 7, including the following steps:

In Step S401, some data that affects provision of service continuity function to the subscriber (such as operator policy, location of a subscriber, and ability of a user terminal) changes, an HSS/HLR is aware of the change and confirms, based on the change, that a result of a decision will change. Or, the results of some entities that decide whether to provide service continuity function to the subscriber, such as the AS change, and the change is informed to the HSS/HLR.

In Step S402, the HSS/HLR temporarily denies providing service continuity function for the subscriber according to the acquired result of the decision.

The manner for acquiring the result of the decision is similar to that of the first embodiment, the HSS/HLR can acquire the result from a decision-making entity, such as an AS, or the HSS/HLR can acquire the result from itself.

In Step S403, the HSS/HLR inserts subscription data to the MSC/VLR via a MAP_INSET_SUB_DATAREQ message, and the subscription data does not include intelligent subscription data, but includes all CS domain supplementary service subscription data that the subscriber subscribes to. The parameters included in the subscription data are similar to that of the first embodiment. The CS domain supplementary service subscription data is also similar to that of the first embodiment.

In Step S404, the MSC/VLR returns inserted subscription data response message to the HSS/HLR.

The above descriptions are illustrated by taking the GSM/WCDMA as an example, if it is applied to a CDMA2000 system, the message in step S403 is Qualification Directive message.

The first and second embodiments are illustrated by taking as an example the condition that the inserted subscription data includes all CS domain supplementary service subscription data that the subscriber subscribes to. However, embodiments of the present invention are not limited thereto, embodiments of the invention can be applied to the following conditions:

The HSS/HLR partially downloads CS domain supplementary service subscription data of a subscriber to MSC/VLR, according to a result of a decision that is not to provide service continuity function to the subscriber. The HSS/HLR can insert service data to the MSC/VLR during registration of a subscriber or after a subscriber has registered and the HSS/HLR is aware of a change of a result of a decision. The inserted data shall include intelligent subscription data.

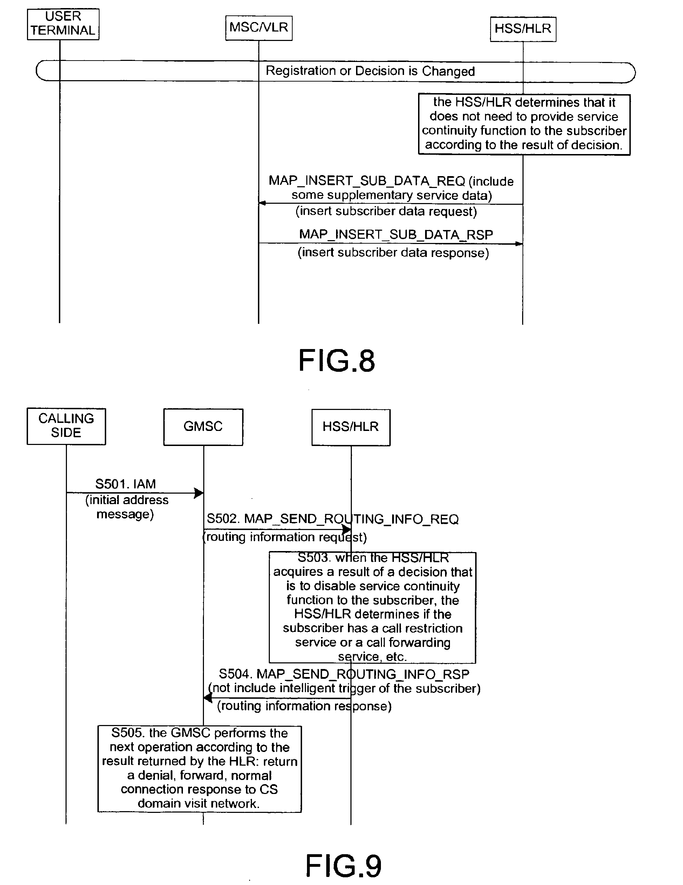

A detailed implementation process under such condition is shown in Fig. 8, including the following steps:

A subscriber initiates a registration or an HSS/HLR is aware of a change of a result of a decision, as introduced in the first and second embodiments.

The HSS/HLR temporarily denies providing some service continuity functions for the subscriber according to the acquired result of the decision.

The manner for acquiring the result of the decision is similar to that of the first embodiment, the HSS/HLR can acquire the result from a decision-making entity, such as an AS, or the HSS/HLR can acquire the result from itself.

The HSS/HLR then inserts subscription data to the MSC/VLR via a MAP_INSET_SUB_DATAREQ message, and the subscription data includes a part of CS domain supplementary service subscription data that the subscriber subscribes to (such as Call Waiting, Multiple Party Service and Explicit Communication Transfer Service, etc.), and also includes intelligent subscription data.

Some supplementary services that are not provided in CS domain are provided in PS domain; the PS domain also provides services that are provided in CS domain.

Then, the MSC/VLR returns an inserted subscription data response message to the HSS/HLR.

A third embodiment of the present invention provides a third method for providing CS domain service. According to this method, when a subscriber is a called party, an HSS/HLR receives a call control signaling. The HSS/HLR denies returning intelligent subscription data according to an acquired result of a decision indicating that the network temporarily denies providing service continuity function to the subscriber at some time. CS domain supplementary service of the subscriber is triggered. Detailed implementation process is shown in Fig. 9, including the following steps:

In Step S501, GMSC of a Home Network Gateway of a called party receives a call request sent from a calling side.

In Step S502, the GMSC request location information of the subscriber from the HSS/HLR via a MAP signaling of a Send_Routing_Info_req (routing information request) message.

It is illustrated in the figure taking a GSM/WCDMA network as an example, and if it is applied to a CDMA2000 network, the signaling should be Location Request signaling.

In Step S503, the HSS/HLR denies returning an intelligent trigger of the subscriber according to a result of a decision indicating denying providing service continuity function to the subscriber. The HSS/HLR also determines whether a CS domain supplementary service that the subscriber subscribes to includes an originating call restriction service or a Call Forwarding service (including Call Forwarding Unconditional and Call Forwarding On Busy in CDMA 2000 network). If the CS domain supplementary service includes such services, then the HSS/HLR performs supplementary service logical operation. If the CS domain supplementary service does not include such services, then the HSS/HLR requests a roaming number from a visited network according to a normal CS domain called party process.

The manner for acquiring the result of the decision is similar to that of the first embodiment.

In Step S504, the HSS/HLR returns a corresponding response according to the result of the decision in the previous step. If the result of the decision is subscriber call restriction, a call restriction response is returned. If the result of the decision is that the subscriber subscribes to Call Forwarding Service, a forwarding number is returned. If the result of the decision is that the subscriber does not have the above supplementary services, a roaming number is returned.

In Step S505, the GMSC performs the next operation according to the result returned by the HSS/HLR. If call restriction is returned, a call restriction response is returned to the calling side. If a forwarding number or roaming number is returned, the next route is performed according to the forwarding number or roaming number.

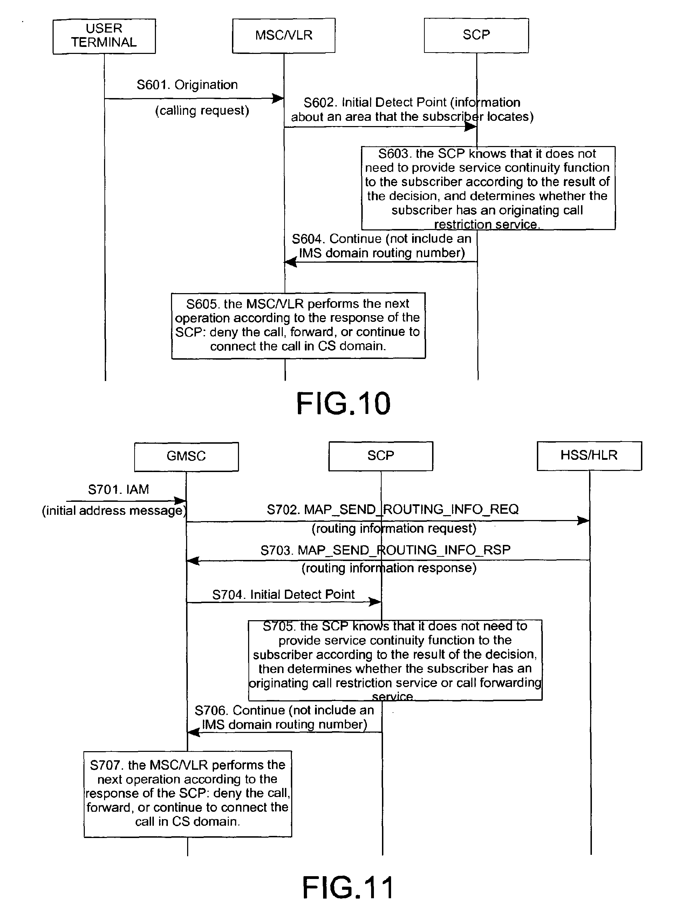

A fourth embodiment of the present invention provides a fourth method for providing CS domain service. According to this method, when a subscriber is a calling party, an SCP entity receives a call control signaling. The SCP entity denies returning an IMS domain routing number according to an acquired result of a decision indicating that the network temporarily denies providing service continuity function to the subscriber at some time. The SCP entity also performs CS domain supplementary service that the subscriber subscribes to. Detailed implementation process is shown in Fig. 10, including the following steps:

In Step 601, a user terminal initiates a call in CS domain, and an MSCNLR receives Origination (calling request).

In Step S602, the MSC/VLR triggers intelligent Initial Detect Point signaling to the SCP according to an intelligent trigger that the subscriber subscribes to. The signaling carries information about an area that the subscriber locates in.

In Step S603, the SCP knows that it temporarily does not need to provide service continuity function to the subscriber during the current call according to the acquired result of the decision, and then the SCP denies returning an IMS domain routing number and determines whether the subscriber has subscribed to some CS domain supplementary services such as Calling. If the subscriber has subscribed to such services and complies with the restriction condition, the SCP returns a denial response; otherwise, the SCP returns an indication to continue the call.

The CS domain supplementary services include Calling CS domain supplementary services, such as an originating call restriction service, and a call redirection service.

The result of the decision can be obtained by the SCP itself based on the acquired information, such as the information about the area that the subscriber locates in, or the SCP can be informed of the result of the decision by another network entity which makes the decision based on some reference information.

The SCP acquires CS domain supplementary service subscription data of the subscriber via subscribing or inquiring to the HSS/HLR.

In Step S604, the SCP returns a corresponding response message according to the result of executing supplementary service logic.

If a denial is returned, the response is Release Call, and if an indication of continuing the call is returned, the response is Continue.

In Step S605, the MSC/VLR performs the next operation according to the response of the SCP. If the response is a denial of the call, then a denial response is returned to the terminal. If the response is to continue the call, it is continued to connect the call in CS domain.

The above descriptions are illustrated by taking the GSM/WCDMA as an example, if it is applied to a CDMA2000 system, the signaling in step S602 is Origination Request signaling. And in step 604, the returned message is Origination Request Return Result response message. If a denial is returned, parameters about the reasons of Access-Deny are also carried. If an indication of continuing the call is returned, parameters about the reasons for denying access are not carried.

A fifth embodiment of the present invention provides a fifth method for providing CS domain service. According to this method, when a subscriber is a calling party, an SCP entity receives a call control signaling. The SCP entity does not return an IMS domain routing number according to an acquired result of a decision that the network temporarily denies providing service continuity function for the subscriber at some time. The SCP entity also performs CS domain supplementary service that the subscriber subscribes to. Detailed implementation process is shown in Fig. 11, including the following steps:

In Step S701, a GMSC receives a call establishing request sent from a calling party network.

In Step S702, the GMSC requests location information of a called party from an HSS/HLR via a SEND_ROUTING_INFO_REQ signaling.

In Step S703, the HSS/HLR returns intelligent service subscription trigger information of the subscriber according to the subscription situation of the intelligent service of the subscriber.

In Step S704, the GMSC sends an Initial Detect Point intelligent control signaling to an SCP according to an address of SCP within the intelligent trigger information.

In Step S705, the SCP knows that it temporarily does not need to provide service continuity function for the subscriber during the current call according to the acquired result of the decision, and then the SCP does not return an IMS domain routing number and determines whether the subscriber has subscribed to some CS domain supplementary services such as Calling. If the subscriber has subscribed to such services and complies with restriction condition, the SCP returns a denial response; otherwise, the SCP returns an indication to continue the call.

The SCP acquires CS domain supplementary service subscription data of the subscriber by subscribing or inquiring to the HSS/HLR. The CS domain supplementary services include the Incoming Call Barring service and the Call Forwarding service.

The result of the decision can be obtained by the SCP itself based on the acquired information, such as the information about the area that the subscriber locates in, or the SCP can be informed of the result of the decision by another network entity which makes the decision based on some reference information. The parameters included in the reference information and the manners for acquiring the information are similar to that of the first embodiment.

In Step S706, the SCP returns a corresponding response message according to the result of executing supplementary service logic.

If a denial is returned, the response is Release Call, if an indication of continuing the call is returned, the response is Continue, and if a forwarding number is returned, the response is Connect response.

In Step S707, the GMSC performs the next operation according to the response of the SCP. If the response is a denial of the call, then a denial response is returned to the terminal. If the response is to continue the call, it is continued to connect the call in CS domain. If the response is to forward the call, the call is connected according to the forwarding number.

The above descriptions are illustrated by taking the GSM/WCDMA as an example, if it is applied to a CDMA2000 system, the signaling in step S702 is LOCATION REQUEST Signaling, the signaling in step 704 is Analyzed Signaling, and the returned response messages in step 706 are all Analyzed Return Result response messages. If a denial is returned, parameters about the reasons of Access-Deny are also carried. If an indication of continuing the call is returned, parameters about the reasons for denying access are not carried. If an indication of forwarding the call is returned, the forwarding number is added.

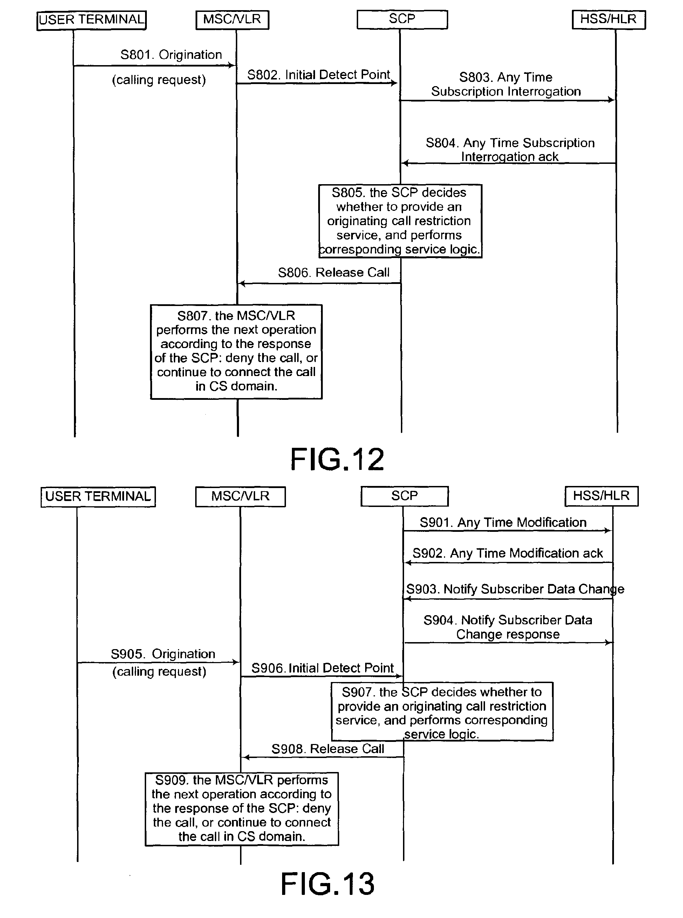

A sixth embodiment of the present invention provides a sixth method for providing CS domain service. According to this method, when a functional entity that provides CS domain service is located in an SCP, the SCP entity acquires originating call restriction service data that the subscriber subscribes to by inquiring to an HSS/HLR after the SCP entity receives a call control signaling of a calling party. Then, if a decision of providing originating call restriction service is made based on the originating call restriction service data that the subscriber subscribes to and call attribute information, the call is denied, that is, CS domain originating call restriction service is performed. Detailed implementation process is shown in Fig. 12, including the following steps:

In Step 801, a user terminal initiates a call in CS domain, and an MSCNLR receives Origination (calling request).

In Step S802, the MSCNLR triggers intelligent Initial Detect Point signaling to the SCP according to an intelligent trigger that the subscriber subscribes to. The signaling carries information about an area that the subscriber locates in.

In Step S803, the SCP sends an Any Time Subscription Interrogation Request to the HSS/HLR for inquiring originating call restriction service data that the subscriber subscribes to.

The originating call restriction service includes the Call Barring service and the Operator Determined Barring service.

In Step S804, the HSS/HLR returns originating call restriction service data, which the subscriber subscribes to, to the SCP via an Any Time Subscription Interrogation ack.

In Step S805, the SCP decides whether to provide subscribed originating call restriction service to the subscriber based on the originating call restriction service data that the subscriber subscribes to, which is returned from the HSS/HLR. The SCP also executes corresponding service logic according to the result of the decision. If the result of the decision indicates to provide originating call restriction service, the call is denied; otherwise, it is indicated to continue the call.

For example, if the subscriber subscribes to restrict all callings, the SCP denies the call requests initiated by the subscriber for calling other subscribers according to the subscription data of the subscriber.

In Step S805, the SCP may also decide whether to provide subscribed originating call restriction service for the subscriber based on the acquired originating call restriction service data that the subscriber subscribes to, in combination with attributes of the current call. The SCP also executes corresponding service logic according to the result of the decision.

For example, if the subscriber subscribes to restrict only one form of calling, such as to restrict only toll calls, then the SCP determines whether a call is a toll call based on the number of the called party and location information of the subscriber. If the call is a toll call, the call is denied, that is, to perform the CS domain originating call restriction service.

In Step S806, the SCP returns a corresponding response message according to the result of performing the service logic.

If the result of performing the service logic is to deny the call, a Release Call response message is returned to the MSC/VLR. If the result of performing the service logic is an indication of continuing the call, a Continue response message is returned.

In Step S807, the MSC/VLR performs the next operation according to the response of the SCP. If the response is a denial of the call, then a denial response is returned to the terminal. If the response is to continue the call, it is continued to connect the call in CS domain.

The above descriptions are illustrated by taking the GSM/WCDMA as an example; if it is applied to a CDMA2000 system, the signaling in step S802 is Origination Request Signaling, the signaling in step S803 is SEARCH Signaling, and the signaling in step S804 is search signaling. And in step 806, the returned message is Origination Request Return Result response message. If a denial is returned, parameters about the reasons of Access-Deny are also carried. If an indication of continuing the call is returned, parameters about the reasons of access deny are not carried.

A seventh embodiment of the present invention provides a seventh method for providing CS domain service, the method can subsequently provide CS domain services to a subscriber when two kinds of networks coexist. According to this method, after the process of the sixth embodiment is completed, if the SCP needs to redirect the CS domain services of the subscriber to a PS domain, the CS domain services can still be provided to the subscriber via the processes of the fourth embodiment or the fifth embodiment. Detailed descriptions are shown in the sixth embodiment, the fourth embodiment or the fifth embodiment, and will not be described in detail here.

An eighth embodiment of the present invention provides an eighth method for providing CS domain service when two kinds of networks coexist. According to this method, when a functional entity that provides CS domain service is located in an SCP, the SCP entity subscribes a change of originating call restriction service data that the subscriber subscribes to from an HSS/HLR, and the HSS/HLR returns originating call restriction service data that the subscriber currently subscribes to the SCP. When the originating call restriction service data that the subscriber subscribes to changes in the HSS/HLR, the SCP is informed. After the SCP entity receives a call control signaling of a calling party, the SCP decides whether to provide subscribed originating call restriction service to the subscriber based on the originating call restriction service data that the subscriber subscribes to. If the decision is to provide originating call restriction service, the call is denied, that is, CS domain originating call restriction service is performed. Detailed implementation process is shown in Fig. 13, including the following steps:

In Step S901, an SCP send an Any Time Modification message to an HSS/HLR at some time and subscribes to originating call restriction service data.

The originating call restriction service includes CB Service and ODB Service.

In Step S902, the HSS/HLR returns an Any Time Modification ack message to the subscriber, and the message carries originating call restriction service data that the subscriber currently subscribes to.

When the HSS/HLR finds the originating call restriction service that the subscriber subscribes to changes, step S903 is performed. A Notify Subscription data Change message is send to inform the SCP, and the message carries originating call restriction service data that the subscriber currently subscribes to.

In Step S904, the SCP sends a Notify Subscription data Change response message to the HSS/HLR.

In Step S905, a user terminal initiates a call in CS domain, and an MSC/VLR receives Origination (calling request).

In Step S906, the MSC/VLR triggers intelligent Initial Detect Point signaling to the SCP according to an intelligent trigger that the subscriber subscribes to. The signaling contains call attribute information which carries location information about an area that the subscriber locates in.

In Step S907, the SCP decides whether to provide subscribed originating call restriction service for the subscriber based on the originating call restriction service data returned from the HSS/HLR. The SCP also performs corresponding service logic. If a result of the decision is to provide originating call restriction service continuously, the call is denied, that is, the originating call restriction service is performed; otherwise, it is indicated to continue the call.

The SCP may also decide whether to provide subscribed call restriction service to the subscriber continuously based on the acquired call restriction service data that the subscriber subscribes to, in combination with attributes of the current call. The SCP also performs corresponding service logic.

In Step S908, the SCP returns a corresponding response message according to the result of performing the service logic.

If the result of performing the service logic is to deny the call, the response is a Release Call response message. If the result of performing the service logic is an indication of continuing the call, the response is a Continue response message.

In Step S909, the MSC/VLR performs the next operation according to the response of the SCP. If the response is a denial of the call, then a denial response is returned to the terminal. If the response is to continue the call, it is continued to connect the call in CS domain.

A ninth embodiment of the present invention provides a ninth method for providing CS domain service, the method can subsequently provide CS domain services to a subscriber when two kinds of networks coexist. Core concept of this method is: after the process of the eighth embodiment is completed, if the SCP needs to redirect the CS domain services of the subscriber to a PS domain, the CS domain services can still be provided to the subscriber via the processes of the fourth embodiment or the fifth embodiment. Detailed descriptions are shown in the eighth embodiment, the fourth embodiment or the fifth embodiment, and will not be described in detail here.

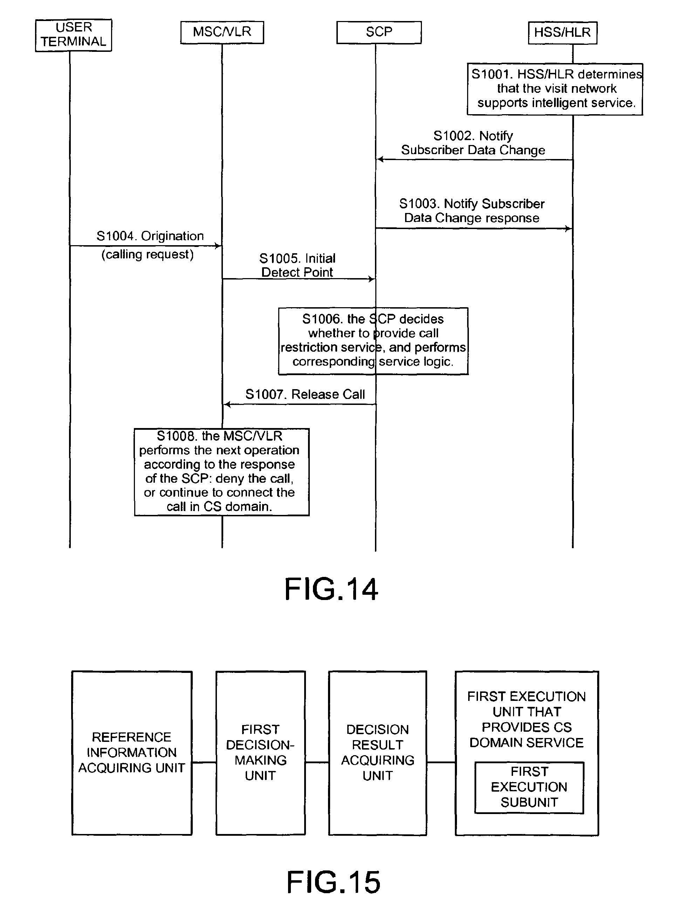

A tenth embodiment of the present invention provides a tenth method for providing CS domain service. According to this method, an HSS/HLR determines whether the current visited network of the subscriber supports intelligent service, when the visited network does not support intelligent service, subscriber originating call restriction service data is downloaded to an MSC/VLR of the visited network and the MSC/VLR performs supplementary service. When the visited network supports intelligent service, the HSS/HLR downloads intelligent service data to the MSC/VLR and downloads originating call restriction service data to an SCP. After the SCP entity receives a call control signaling of a calling party, the SCP decides whether to provide subscribed originating call restriction service for the subscriber based on the originating call restriction service data that the subscriber subscribes to. If the decision is to provide originating call restriction service, the call is denied, that is, CS domain originating call restriction service is performed. Detailed implementation process is shown in Fig. 14, including the following steps:

In Step S1001, an HSS/HLR determines whether the current visited network of the subscriber supports intelligent service, when the visited network does not support intelligent service, subscriber originating call restriction service data is downloaded to an MSC/VLR of the visited network and the MSC/VLR performs supplementary service. When the visited network supports intelligent service, the HSS/HLR downloads intelligent service data to the MSC/VLR and performs step S1002.

In Step S1002, when a subscriber registers or subscription data changes, a Notify Subscription data Change message is sent to inform the SCP, and the message carries originating call restriction service data that the subscriber currently subscribes to.

In Step S1003, the SCP sends a Notify Subscription data Change response message to the HSS/HLR.

In Step S1004, a user terminal initiates a call in CS domain, an MSC/VLR receives Origination (calling request).

In Step S1005, the MSC/VLR triggers intelligent Initial Detect Point signaling to the SCP according to an intelligent trigger that the subscriber subscribes to. The signaling contains call attribute information which carries location information about an area that the subscriber locates in.

In Step S1006, the SCP decides whether to provide subscribed originating call restriction service for the subscriber based on the originating call restriction service data returned from the HSS/HLR. The SCP also performs corresponding service logic. If a result of the decision is to provide originating call restriction service continuously, the call is denied, that is, the originating call restriction service is performed; otherwise, it is indicated to continue the call.

The SCP may also decide whether to provide subscribed call restriction service for the subscriber continuously based on the acquired call restriction service data that the subscriber subscribes to, in combination with attributes of the current call. The SCP also performs corresponding service logic.

In Step S1007, the SCP returns a corresponding response message according to the result of performing the service logic.

If the result of performing the service logic is to deny the call, the response is a Release Call response message. If the result of performing the service logic is an indication of continuing the call, the response is a Continue response message.

In Step S1008, the MSC/VLR performs the next operation according to the response of the SCP. If the response is a denial of the call, then a denial response is returned to the terminal. If the response is to continue the call, the call is continued.

An eleventh embodiment of the present invention is an expansion of the tenth embodiment, and can subsequently provide CS domain services for a subscriber when two kinds of networks coexist. According to the eleventh embodiment, after the process of the tenth embodiment is completed, if the SCP needs to redirect the CS domain services of the subscriber to a PS domain, the CS domain services can still be provided for the subscriber via the processes of the fourth embodiment or the fifth embodiment. Detailed descriptions are shown in the tenth embodiment, the fourth embodiment or the fifth embodiment, and will not be described in detail here.

A twelfth embodiment of the present invention provides a first system for providing CS domain service, and the structure of the system is shown in Fig. 15, including: a first execution unit configured to provide CS domain service, a decision result acquiring unit, and a first decision-making unit. Wherein the first execution unit that provides CS domain service further includes a first execution subunit. The system further includes a reference information acquiring unit.

The reference information acquiring unit acquires various reference information based on received registration signaling and/or call control signaling, or, acquires reference information based on interaction signaling that interacts with information providing entities in the network. The reference information acquiring unit then sends the acquired information to the first decision-making unit.

The first decision-making unit makes a decision according to the multifarious reference information and obtains a corresponding result of the decision. The multifarious reference information includes one or more of the following: subscriber personal preference, operator policy, subscriber roaming status, current location of a user terminal, intelligent processing ability of a visited network of a subscriber, and/or user terminal ability information.

The first decision-making unit acquires the result of a decision and forwards the result of the decision to the first execution subunit in the first execution unit that provides CS domain service.

The first execution subunit is configured to download CS domain supplementary service subscription data of a user terminal to a VMSC/VLR when an HSS/HLR receives a registration signaling of the subscriber and acquires a result of a decision indicative of denying providing service control functional information to the subscriber in PS domain during subscriber registration. At this time, intelligent subscription data includes intelligent trigger data that is associated with service continuity function. CS domain supplementary service subscription data includes one or more of the following: Call Forwarding Service, Number Displaying Service, Originating Call Restriction Service, Multiple Party Service, and/or Data Service Information. Or, the first execution subunit is configured to perform the following: after a registration of a subscriber, detecting whether a result of a decision will change. If the result of the decision changes and it is determined that the network temporarily denies providing service control functional information for the subscriber in PS domain at some time, CS domain supplementary service subscription data of a user terminal is downloaded to a VMSC/VLR. At this time, intelligent subscription data includes intelligent trigger data that is associated with service continuity function. CS domain supplementary service subscription data includes one or more of the following: Call Forwarding Service, Number Displaying Service, Originating Call Restriction Service, Multiple Party Service, and/or Data Service Information. Or, the first execution subunit is configured to perform the following: when a subscriber is a called party, an HSS/HLR receives a call control signaling and detects that the network temporarily denies providing service control functional information for the subscriber in PS domain at some time, subscriber CS domain supplementary service is triggered. At this time, intelligent subscription data includes intelligent trigger data that is associated with service continuity function, or intelligent trigger data that is associated with service centralized control function. CS domain supplementary service subscription data includes one or more of the following: Call Forwarding Service and/or Originating Call Restriction Service.

The first decision-making unit can be located in the Home Subscriber Server (HSS) or the Hone Location Register (HLR) together with the first execution subunit in the first execution unit that provides CS domain service, or can be separately located in an entity in the network that has decision functions.

According to the above twelfth embodiment, a subscription data processing subunit can further be included. The subscription data processing subunit is configured to perform as follows: after an HSS/HLR receives a registration signaling, downloads all CS domain supplementary service subscription data to a VMSC/VLR and acquires a result of a decision that is to exclude service control functional information from to the subscriber in PS domain, the subscription data processing subunit denies providing intelligent subscription data to the VMSC/VLR. Or, the subscription data processing subunit is configured to perform as follows: after an HSS/HLR receives a registration signaling, downloads all CS domain supplementary service subscription data to a VMSC or VLR, detects that a result of a decision changes, and determines based on the change of the result of the decision that the network temporarily denies providing service control functional information for the subscriber in PS domain at some time, and intelligent subscription data in a VMSC or VLR is deleted. Or, the subscription data processing subunit is configured to perform as follows: when a subscriber is a called party, an HSS/HLR receives a call control signaling and acquires a result of a decision that is not to provide service control for the subscriber in PS domain, and excludes intelligent subscription data.

A thirteenth embodiment of the present invention provides a second system for providing CS domain service, including: a first execution unit configured to provide CS domain service, a decision result acquiring unit, and a first decision-making unit. Wherein the first execution unit that provides CS domain service further includes a second execution subunit. The system further includes a reference information acquiring unit.

The reference information acquiring unit acquires multifarious reference information based on received registration signaling and/or call control signaling, or, acquires various reference information based on interaction signaling that interacts with information providing entities in the network. The reference information acquiring unit then sends the acquired information to the first decision-making unit. The multifarious reference information includes one or more of the following: subscriber personal preference, operator policy, subscriber roaming status, current location of a user terminal, intelligent processing ability of a visited network of a subscriber, and/or user terminal ability information.

The first decision-making unit makes a decision according to the multifarious reference information and obtains a corresponding result of the decision.

The first decision-making unit acquires the result of a decision and forwards the result of the decision to the second execution subunit in the first execution unit configured to CS domain service.

The second execution subunit is configured to exclude intelligent subscription data and perform circuit service logic that the user terminal subscribes to, when a user terminal is a calling party or a called party, and an SCP receives a call control signaling and acquires a result of a decision that is to deny performing service control for the subscriber in PS domain. When a subscriber is a calling party, CS domain supplementary service includes originating call restriction service and/or call redirection service; when a subscriber is a called party, CS domain supplementary service includes callee restriction service and/or call forwarding service.

A fourteenth embodiment of the present invention provides a third system for providing CS domain service, including: an HSS or HLR, and an SCP. The SCP includes a subscription data acquiring unit and a second execution unit that provides CS domain service. The subscription data acquiring unit includes a first subscription data acquiring subunit and a second subscription data acquiring subunit. The second execution unit that provides CS domain service further includes a third execution subunit.

Signal forwarding relationship between the components within the system is as follows:

The SCP subscribes with the HSS or HLR via the first subscription data acquiring subunit in the subscription data acquiring unit, and acquires originating call restriction service data that the subscriber subscribes to from the HSS or HLR. Detailed process is similar to that of the eighth embodiment and will not be described here. Or, after the SCP receives an intelligent call signaling, the SCP inquires to the HSS or HLR via the second subscription data acquiring subunit to acquire originating call restriction service data that the subscriber subscribes to. Detailed process is similar to that of the sixth embodiment and will not be described here.

The SCP performs the following processes via the third execution subunit of the second execution unit that provides CS domain service: determining whether to provide CS domain originating call restriction service for the subscriber according to the subscription data acquired by the subscription data acquiring unit. If it is determined to provide CS domain originating call restriction service, a call of the subscriber is denied, that is, the CS domain originating call restriction service is performed; or, determining whether to provide CS domain originating call restriction service for the subscriber based on acquired call attribute information and the subscription data acquired by the subscription data acquiring unit. If it is determined to provide CS domain originating call restriction service, a call of the subscriber is denied, that is, the CS domain originating call restriction service is performed. Detailed processes are similar to that of the sixth embodiment and the eighth embodiment, and will not be described here.

The originating call restriction service includes: Call Barring Service and/or Operator Determined Barring Service.

A fifteenth embodiment of the present invention provides a fourth system for providing CS domain service, including: an HSS or HLR, and an SCP. The HSS or HLR includes data delivery object determining unit and data delivering unit. The SCP includes a subscription data acquiring unit and a second execution unit that provides CS domain service. The subscription data acquiring unit includes a third subscription data acquiring subunit. The second execution unit that provides CS domain service further includes a third execution subunit.

Signal forwarding relationship between the components within the system is as follows:

The HSS or HLR determines to download CS domain supplementary service subscription data of a subscriber to an MSC/VLR or the SCP via the data delivery object determining unit, based on information about whether a visited network supports intelligent service process ability. If it is determined that CS domain supplementary service subscription data of a subscriber be downloaded to the SCP, originating call restriction service data that the subscriber subscribes to are delivered actively to the SCP via the data delivering unit. The SCP acquires the originating call restriction service data that is delivered actively by the HSS/HLR via the third subscription data acquiring subunit in the subscription data acquiring unit. Detailed process is similar to that of the tenth embodiment and will not be described here.

The third execution subunit of the second execution unit that provides CS domain service is configured to:
determine whether to provide CS domain originating call restriction service for the subscriber based on subscription data acquired by the subscription data acquiring unit. If it is determined to provide CS domain originating call restriction service, a call of the subscriber is denied, that is, to perform the CS domain originating call restriction service; or,
determine whether to provide CS domain originating call restriction service for the subscriber based on acquired call attribute information and the subscription data acquired by the subscription data acquiring unit. If it is determined to provide CS domain originating call restriction service, a call of the subscriber is denied, that is, the CS domain originating call restriction service is performed. Detailed processes are similar to that of the tenth embodiment and the eighth embodiment, and will not be described here.

The originating call restriction service includes: Call Barring Service and/or Operator Determined Barring Service.

A sixteenth embodiment of the present invention provides a fifth system for providing CS domain service, some components that are needed for implementing service redirection when two kinds of networks coexisting are added to the fourteenth embodiment or the fifteenth embodiment, including: a third execution unit that provides CS domain service, a decision result acquiring unit, and a second decision-making unit. The third execution unit that provides CS domain service further includes a fourth execution subunit. The system further includes a reference information acquiring unit. The functions of the third execution unit that provides CS domain service and the fourth execution subunit therein are the same as the first execution unit that provides CS domain service and the second execution subunit of the thirteenth embodiment. The second decision-making unit has the same function as the first decision-making unit of the thirteenth embodiment. The functions of the decision result acquiring unit and the reference information acquiring unit are the same as the corresponding units in the thirteenth embodiment, signal forwarding relationship among these components are also similar to that of the thirteenth embodiment and will not be described here.

A seventeenth embodiment of the present invention provides an SCP for providing CS domain service. The SCP includes a subscription data acquiring unit and a second execution unit that provides CS domain service. The subscription data acquiring unit includes a third subscription data acquiring subunit. The second execution unit that provides CS domain service includes a third execution subunit. The SCP further includes a decision result acquiring unit and a second decision-making unit. The difference between the present embodiment and the sixteenth embodiment is the decision result acquiring unit, the decision result acquiring unit of the present embodiment merely acquires reference information from the received call control signaling or acquired reference information via interacting with information providing entities in the network. The decision result acquiring unit of the present embodiment also sends the reference information to the decision-making unit. Functions of other components are similar to that of the sixteenth embodiment.

It can be seen from embodiments of the present invention that an execution entity that provides CS domain service in a network acquires a result of a decision, and re-provides original CS domain service to the subscriber when the execution entity detects that the acquired result includes a message indicative of denying controlling circuit service of the subscriber in a PS domain. Then the original CS domain service can be provided to the subscriber continuously when service continuity function for the subscriber is disabled due to some reasons, and the problem existing in prior art that original CS domain supplementary service cannot be subsequently provided to the subscriber when service continuity function of redirecting a CS call to the IMS domain for the subscriber is disabled due to some reasons, is solved.

Additionally, embodiments of the present invention acquires subscription data via an SCP in a network, and denies call of a subscriber when it is determined to provide CS domain originating call restriction service according to acquired subscription data. Embodiments of the present invention provide a solution that utilizes SCP to provide CS domain supplementary service. Then SCP can be responsible to providing supplementary services such as calling restriction when CS domain supplementary services are not provided by MSCNLR.

Furthermore, according to embodiments of the present invention, when a subscriber is a calling party or a called party, SCP denies returning PS domain routing number and performs CS domain supplementary service logic that a subscriber subscribes to when the SCP receives a call control signaling and acquires a result of a decision that is not to provide service continuity function to the subscriber. When two kinds of networks coexist, the services can be provided by the SCP uniformly. Therefore, the affection between the provision of CS domain supplementary service and provision of service continuity function can be avoided, the difficulty of acquiring CS domain reference information when the CS domain supplementary service is provided by IMS domain entities is also avoided.

The above embodiments are merely used to illustrate the present invention but not to limit the present invention.

## Claims

1. A method for providing circuit switched, CS, domain services, **characterized in** comprising:
acquiring, by an execution entity that provides CS domain service in a network, a result of a decision; and
providing CS domain services to a subscriber in the CS domain when the execution entity detects that the acquired result comprises an indication of denying controlling circuit domain service of the subscriber in a packet domain, and when the execution entity that provides CS domain services is located in HSS or HLR, the method further comprises:
downloading (S304) CS domain supplementary service, SS, data of the subscriber to a Visited network Mobile Switch Center, VMSC, or a Visitor Location Register, VLR, when the HSS/HLR receives a registration signaling and acquires (S303) a result of a decision indicative of denying providing circuit domain service control for the subscriber in packet domain, during registration of a subscriber; or
downloading (S403) CS domain SS data of the subscriber to the VMSC or VLR when the HSS/HLR is aware of a change of a result of a decision and thereby determines that the network denies (S402) providing circuit domain service control for the subscriber in packet domain, after registration of the subscriber.

2. The method of claim 1, **characterized in that**, the CS domain supplementary service data comprises at least one of the following services data: Call Forwarding Service, Number Displaying Service, Originating Call Restriction Service, Call Waiting Service, Call Holding Service, Explicit Communication Transfer Service, Multiple Party Service, and Data Service.

3. The method of claim 2, **characterized in** further comprising:
denying returning intelligent subscription data to the VMSC or VLR after the HSS or HLR receives a registration signaling, downloads all CS domain SS subscription data to the VMSC or VLR and acquires the result of the decision of indicative of denying performing circuit domain service control for the subscriber in packet domain; or
deleting intelligent subscription data in the VMSC or VLR after the HSS or HLR downloads all CS domain SS subscription data to the VMSC or VLR and detects a change in the result of the decision and confirms that the network denies performing circuit domain service control for the subscriber in packet domain.

4. The method of claim 1, **characterized in that**, when the execution entity that provides CS domain service is located in HSS or HLR, the method further comprises:
triggering CS domain supplementary service for the subscriber after an HSS/HLR receives a call control signaling and the acquires the result of a decision indicating that the network denies performing circuit domain service control for the subscriber in packet domain, when the subscriber is a called party.

5. The method of claim 4, **characterized in that**, when the execution entity that provides CS domain service is located in HSS or HLR, the method further comprises:
denying returning intelligent subscription data of the subscriber after the HSS/HLR receives a call control signaling and the HSS/HLR acquires the result of a decision indicating that the network denies performing circuit domain service control for the subscriber in packet domain, when the subscriber is a called party.

6. The method of claim 1, **characterized in** further comprising:
making a decision, by a decision-making entity in the network, based on acquired reference information, and forwarding the result of the decision to the execution entity that provides CS domain service; or
making a decision, by the execution entity that provides CS domain service, based on various acquired reference information, and obtaining a corresponding result of the decision.

7. The method of claim 6, **characterized in that**, the reference information comprises: subscriber preference, operator policy, subscriber roaming status, current location of a user terminal, intelligent processing capability of a visited network of a subscriber, and/or user terminal capability information.

8. The method of claim 6, **characterized in** further comprising:
acquiring the reference information via a received registration signaling and /or a received call control signaling: or
acquiring the reference information by interacting with an information providing entity in the network.

9. A system for providing circuit switched, CS, domain service, **characterized in** comprising:
a decision result acquiring unit, configured to acquire a result of a decision and forward the result of the decision to a first execution unit that provides CS domain service; and
a first execution unit that provides CS domain service, configured to determine whether the acquired result comprises an indication of denying controlling circuit service of the subscriber in a packet domain, and provide CS domain service to the subscriber if it is determined that the indication of denying controlling circuit service of the subscriber in the packet domain is comprised, when the first execution unit that provides CS domain service is located in HSS or HLR, the first execution unit that provides CS domain service further comprises:
a first execution subunit, configured to:
download CS domain supplementary service subscription data of a user terminal to a Visited Mobile Switch Center, VMSC, or Visitor Location Register, VLR, when the HSS/HLR receives a registration signaling of the subscriber and determines that a result of decision comprises an indication of denying performing circuit domain service control in packet domain for the user; or
download CS domain supplementary service subscription data of a subscriber to the VMSC/VLR, after a registration of the subscriber, when the HSS or HLR is aware of a change of a result of a decision and determines that the network denies providing circuit domain service control to the subscriber in packet domain based on information about the change of result of the decision.

10. The system of claim 9, **characterized in that**, when the first execution unit that provides CS domain service is located in HSS or HLR, the first execution unit that provides CS domain service further comprises:
a subscription data processing subunit, configured to:
deny returning intelligent subscription data to the VMSCNLR, after the HSS or HLR receives a registration signaling, downloads all CS domain supplementary service subscription data to a VMSC/VLR and acquires a result of a decision indicating that the network denies providing circuit domain service control for the subscriber in packet domain ; or
delete intelligent subscription data in a VMSC or VLR, after the HSS/HLR downloads all CS domain supplementary service subscription data to a VMSC or VLR, detects that a result of a decision changes, and determines that the network denies providing circuit domain service control to the subscriber in packet domain based on information about the change of the result of the decision.

11. The system of claim 9, **characterized in that**, when the first execution unit that provides CS domain service is located in HSS or HLR, the first execution subunit is further configured to:
trigger subscriber CS domain supplementary service after the HSS/HLR receives a call control signaling and detects that the network denies providing service continuity function information to a user terminal based on acquired result of a decision, when a subscriber is a called party.

12. The system of claim 11, **characterized in that** the subscription data processing subunit is further configured to:
exclude intelligent subscription data, when a subscriber is a called party, the HSS/HLR receives a call control signaling and acquires a result of a decision that the network denies providing circuit domain service control to the subscriber in packet domain.

13. The system of claim 9, **characterized in** further comprising:
a first decision-making unit, configured to make a decision according to acquired reference information and forward the obtained result of the decision to the decision result acquiring unit, wherein the reference information comprises: subscriber preference, operator policy, subscriber roaming status, current location of a user terminal, intelligent processing capability of a visited network of a subscriber, and/or user terminal capability information.

14. The system of claim 13, **characterized in** further comprising:
a reference information acquiring unit, configured to acquire reference information based on received registration signaling and/or call control signaling, or, acquire reference information by interacting with an information providing entity in the network, and send the acquired reference information to the decision-making unit.

## Patentansprüche

1. Verfahren zum Bereitstellen von leitungsvermittelten, CS, Domänendiensten, **dadurch gekennzeichnet, dass** es Folgendes umfasst:
Erfassen eines Ergebnisses einer Entscheidung durch eine Ausführungsentität, die einen CS-Domänendienst in einem Netz bereitstellt; und
Bereitstellen von CS-Domänendiensten für einen Teilnehmer in der CS-Domäne, wenn die Ausführungsentität detektiert, dass das erfasste Ergebnis eine Angabe der Ablehnung der Steuerung eines Leitungsdomänendienstes des Teilnehmers in einer Paketdomäne umfasst, wobei, wenn die Ausführungsentität, die die CS-Domänendienste bereitstellt, in einem HSS oder HRL angeordnet ist, das Verfahren ferner Folgendes umfasst:
Herunterladen (S304) von CS-Domänen-Zusatzdienstdaten (CS-Domänen-SS-Daten) des Teilnehmers zu einer Mobilkommunikationsvermittlungsstelle eines besuchten Netzes, VMSC, oder einem Besucherregister, VLR, wenn der HSS/das HLR eine Registrierungssignalisierung empfängt und ein Ergebnis einer Entscheidung erfasst (S303), das die Ablehnung der Bereitstellung einer Leitungsdomänendienststeuerung für den Teilnehmer in einer Paketdomäne angibt, während der Registrierung eines Teilnehmers; oder
Herunterladen (S403) von CS-Domänen-SS-Daten des Teilnehmers zur VMSC oder zum VLR, wenn der HSS/das HLR eine Änderung eines Ergebnisses einer Entscheidung kennt und **dadurch** feststellt, dass das Netz die Bereitstellung einer Leitungsdomänendienststeuerung für den Teilnehmer in der Paketdomäne ablehnt (S402), nach der Registrierung des Teilnehmers.

2. Verfahren nach Anspruch 1, **dadurch gekennzeichnet, dass** die CS-Domänen-Zusatzdienstdaten mindestens eine der folgenden Dienstdaten umfassen: einen Anrufweiterleitungsdienst, Nummernanzeigedienst, Einschränkungsdienst für abgehende Anrufe, Anklopfdienst, Anrufhaltedienst, expliziten Kommunikationsübermittlungsdienst, Mehrfachteilnehmerdienst und Datendienst.

3. Verfahren nach Anspruch 2, **dadurch gekennzeichnet, dass** es ferner Folgendes umfasst:
Ablehnen der Rückgabe von intelligenten Teilnahmedaten an die VMSC oder das VLR, nachdem der HSS oder das HLR eine Registrierungssignalisierung empfängt, alle CS-Domänen-SS-Teilnahmedaten zur VMSC oder zum VLR herunterlädt und das Ergebnis der Entscheidung, das die Ablehnung der Durchführung einer Leitungsdomänendienststeuerung für den Teilnehmer in der Paketdomäne angibt, erfasst; oder
Löschen von intelligenten Teilnahmedaten in der VMSC oder im VLR, nachdem der HSS oder das HLR alle CS-Domänen-SS-Teilnahmedaten zur VMSC oder zum VLR herunterlädt und eine Änderung des Ergebnisses der Entscheidung detektiert und bestätigt, dass das Netz die Durchführung einer Leitungsdomänendienststeuerung für den Teilnehmer in der Paketdomäne ablehnt.

4. Verfahren nach Anspruch 1, **dadurch gekennzeichnet, dass**, wenn die Ausführungsentität, die den CS-Domänendienst bereitstellt, im HSS oder HLR angeordnet ist, das Verfahren ferner Folgendes umfasst:
Auslösen eines CS-Domänenzusatzdienstes für den Teilnehmer, nachdem ein HSS/HLR eine Anrufsteuersignalisierung empfängt und das Ergebnis einer Entscheidung erfasst, das angibt, dass das Netz die Durchführung einer Leitungsdomänendienststeuerung für den Teilnehmer in der Paketdomäne ablehnt, wenn der Teilnehmer ein angerufener Teilnehmer ist.

5. Verfahren nach Anspruch 4, **dadurch gekennzeichnet, dass**, wenn die Ausführungsentität, die den CS-Domänendienst bereitstellt, im HSS oder HLR angeordnet ist, das Verfahren ferner Folgendes umfasst:
Ablehnen der Rückgabe von intelligenten Teilnahmedaten des Teilnehmers, nachdem der HSS/das HLR eine Anrufsteuersignalisierung empfängt und der HSS/das HLR das Ergebnis einer Entscheidung erfasst, das angibt, dass das Netz die Durchführung einer Leitungsdomänendienststeuerung für den Teilnehmer in der Paketdomäne ablehnt, wenn der Teilnehmer ein angerufener Teilnehmer ist.

6. Verfahren nach Anspruch 1, **dadurch gekennzeichnet, dass** es ferner Folgendes umfasst:
Treffen einer Entscheidung durch eine Entscheidungsfindungsentität im Netz auf der Basis von erfassten Referenzinformationen und Weiterleiten des Ergebnisses der Entscheidung zur Ausführungsentität, die den CS-Domänendienst bereitstellt; oder Treffen einer Entscheidung durch die Ausführungsentität, die den CS-Domänendienst bereitstellt, auf der Basis von verschiedenen erfassten Referenzinformationen und Erhalten eines entsprechenden Ergebnisses der Entscheidung.

7. Verfahren nach Anspruch 6, **dadurch gekennzeichnet, dass** die Referenzinformationen Folgendes umfassen: die Teilnehmervorliebe, Betreiberrichtlinien, den Teilnehmer-Roaming-Status, den aktuellen Ort eines Benutzerendgeräts, die intelligente Verarbeitungsfähigkeit eines besuchten Netzes eines Teilnehmers und/oder Benutzerendgerät-Fähigkeitsinformationen.

8. Verfahren nach Anspruch 6, **dadurch gekennzeichnet, dass** es ferner Folgendes umfasst:
Erfassen der Referenzinformationen über eine empfangene Registrierungssignalisierung und/oder eine empfangene Anrufsteuersignalisierung; oder
Erfassen der Referenzinformationen durch Zusammenwirken mit einer Informationen bereitstellenden Entität im Netz.

9. System zum Bereitstellen eines leitungsvermittelten, CS, Domänendienstes, **dadurch gekennzeichnet, dass** es Folgendes umfasst:
eine Entscheidungsergebnis-Erfassungseinheit, die dazu konfiguriert ist, ein Ergebnis einer Entscheidung zu erfassen und das Ergebnis der Entscheidung zu einer ersten Ausführungseinheit weiterzuleiten, die einen CS-Domänendienst bereitstellt; und
eine erste Ausführungseinheit, die einen CS-Domänendienst bereitstellt, die dazu konfiguriert ist festzustellen, ob das erfasste Ergebnis eine Angabe der Ablehnung der Steuerung eines Leitungsdienstes des Teilnehmers in einer Paketdomäne umfasst,
und einen CS-Domänendienst für den Teilnehmer bereitzustellen, wenn festgestellt wird, dass die Angabe der Ablehnung der Steuerung des Leitungsdienstes des Teilnehmers in der Paketdomäne enthalten ist, wenn die erste Ausführungseinheit,
die den CS-Domänendienst bereitstellt, in einem HSS oder HLR angeordnet ist, wobei die erste Ausführungseinheit, die den CS-Domänendienst bereitstellt, ferner Folgendes umfasst:
eine erste Ausführungsuntereinheit, die dazu konfiguriert ist:
CS-Domänen-Zusatzdienst-Teilnahmedaten eines Benutzerendgeräts zu einer besuchten Mobilkommunikationsvermittlungsstelle, VMSC, oder einem Besucherregister, VLR, herunterzuladen, wenn der HSS/das HLR eine Registrierungssignalisierung des Teilnehmers empfängt und feststellt, dass ein Ergebnis der Entscheidung eine Angabe der Ablehnung der Durchführung einer Leitungsdomänendienststeuerung in der Paketdomäne für den Benutzer umfasst; oder CS-Domänen-Zusatzdienst-Teilnahmedaten eines Teilnehmers zur VMSC/zum VLR nach einer Registrierung des Teilnehmers herunterzuladen, wenn der HSS oder das HLR eine Änderung eines Ergebnisses einer Entscheidung kennt und feststellt, dass das Netz die Bereitstellung einer Leitungsdomänendienststeuerung für den Teilnehmer in der Paketdomäne ablehnt, und zwar auf der Basis von Informationen über die Änderung des Ergebnisses der Entscheidung.

10. System nach Anspruch 9, **dadurch gekennzeichnet, dass**, wenn die erste Ausführungseinheit, die den CS-Domänendienst bereitstellt, im HSS oder HLR angeordnet ist, die erste Ausführungseinheit, die den CS-Domänendienst bereitstellt, ferner Folgendes umfasst:
eine Teilnahmedaten-Verarbeitungsuntereinheit, die dazu konfiguriert ist:
die Rückgabe von intelligenten Teilnahmedaten an die VMSC/das VLR abzulehnen, nachdem der HSS oder das HLR eine Registrierungssignalisierung empfängt, alle CS-Domänen-Zusatzdienst-Teilnahmedaten zu einer VMSC/einem VLR herunterlädt und ein Ergebnis einer Entscheidung erfasst, das angibt, dass das Netz die Bereitstellung einer Leitungsdomänendienststeuerung für den Teilnehmer in der Paketdomäne ablehnt; oder
intelligente Teilnahmedaten in einer VMSC oder einem VLR zu löschen, nachdem der HSS/das HLR alle CS-Domänen-Zusatzdienst-Teilnahmedaten zu einer VMSC oder einem VLR herunterlädt, detektiert, dass sich ein Ergebnis einer Entscheidung ändert, und feststellt, dass das Netz die Bereitstellung einer Leitungsdomänendienststeuerung für den Teilnehmer in der Paketdomäne ablehnt, und zwar auf der Basis von Informationen über die Änderung des Ergebnisses der Entscheidung.

11. System nach Anspruch 9, **dadurch gekennzeichnet, dass**, wenn die erste Ausführungseinheit, die den CS-Domänendienst bereitstellt, im HSS oder HLR angeordnet ist, die erste Ausführungsuntereinheit ferner dazu konfiguriert ist:
einen Teilnehmer-CS-Domänenzusatzdienst auszulösen, nachdem der HSS/das HLR eine Anrufsteuersignalisierung empfängt und detektiert, dass das Netz die Bereitstellung von Dienstkontinuitätsfunktions-Informationen für ein Benutzerendgerät ablehnt, und zwar auf der Basis eines erfassten Ergebnisses einer Entscheidung, wenn ein Teilnehmer ein angerufener Teilnehmer ist.

12. System nach Anspruch 11, **dadurch gekennzeichnet, dass** die Teilnahmedaten-Verarbeitungsuntereinheit ferner dazu konfiguriert ist:
intelligente Teilnahmedaten auszuschließen, wenn ein Teilnehmer ein angerufener Teilnehmer ist, der HSS/das HLR eine Anrufsteuersignalisierung empfängt und ein Ergebnis einer Entscheidung erfasst, dass das Netz die Bereitstellung einer Leitungsdomänendienststeuerung für den Teilnehmer in der Paketdomäne ablehnt.

13. System nach Anspruch 9, **dadurch gekennzeichnet, dass** es ferner Folgendes umfasst:
eine erste Entscheidungsfindungseinheit, die dazu konfiguriert ist, eine Entscheidung gemäß erfassten Referenzinformationen zu treffen und das erhaltene Ergebnis der Entscheidung zur Entscheidungsergebnis-Erfassungseinheit weiterzuleiten, wobei die Referenzinformationen Folgendes umfassen: die Teilnehmervorliebe, Betreiberrichtlinien, den Teilnehmer-Roaming-Status, den aktuellen Ort eines Benutzerendgeräts, die intelligente Verarbeitungsfähigkeit eines besuchten Netzes eines Teilnehmers und/oder Benutzerendgerät-Fähigkeitsinformationen.

14. System nach Anspruch 13, **dadurch gekennzeichnet, dass** es ferner Folgendes umfasst:
eine Referenzinformations-Erfassungseinheit, die dazu konfiguriert ist, Referenzinformationen auf der Basis einer empfangenen Registrierungssignalisierung und/oder Anrufsteuersignalisierung zu erfassen oder Referenzinformationen durch Zusammenwirken mit einer Informationen bereitstellenden Entität im Netz zu erfassen und die erfassten Referenzinformationen zur Entscheidungsfindungseinheit zu senden.

## Revendications

1. Procédé permettant de fournir des services de domaine à commutation de circuits, CS, **caractérisé en ce qu'**il comprend :
l'acquisition, grâce à une entité d'exécution qui procure un service de domaine à commutation de circuits CS dans un réseau, du résultat d'une décision, et
la fourniture de services de domaine à commutation de circuits CS à un abonné dans le domaine à commutation de circuits CS lorsque l'entité d'exécution détecte que le résultat acquis comprend une indication de refus de commande de service de domaine par circuits de l'abonné dans un domaine par paquets et, lorsque l'entité d'exécution qui fournit des services de domaine à commutation de circuits CS est située dans un serveur HSS ou dans un registre HLR, le procédé comprenant en outre :
le téléchargement (S304) de données de services supplémentaires, SS, du domaine à commutation de circuits CS de l'abonné vers un centre de commutation mobile de réseau visité, VMSC, ou vers un registre d'emplacement visiteur, VLR, lorsque le serveur HSS ou le registre HLR reçoit une signalisation d'enregistrement et acquiert (S303) le résultat d'une décision qui indique un refus de fourniture de commande de service de domaine par circuits à l'abonné dans le domaine par paquets pendant l'enregistrement d'un abonné, ou
le téléchargement (S403) de données de services SS du domaine à commutation de circuits CS de l'abonné vers le centre VMSC ou vers le registre VLR lorsque le serveur HSS ou le registre HLR est informé du changement de résultat d'une décision et détermine de ce fait que le réseau refuse (S402) de fournir une commande de service de domaine par circuits à l'abonné dans le domaine par paquets après enregistrement de l'abonné.

2. Procédé selon la revendication 1, **caractérisé en ce que** les données de services supplémentaires du domaine à commutation de circuits CS comprennent au moins l'une des données de services suivantes : un service de renvoi d'appel, un service d'affichage du numéro, un service de restriction d'appel de départ, un service d'appel en instance, un service de dispositif d'attente, un service de transfert explicite de communication, un service de conférence et un service de données.

3. Procédé selon la revendication 2, **caractérisé en ce qu'**il comprend en outre :
le refus de renvoi de données intelligentes d'abonnement vers le centre VMSC ou le registre VLR après que le serveur HSS ou le registre HLR a reçu une signalisation d'enregistrement, a téléchargé toutes les données d'abonnement de services SS du domaine à commutation de circuits CS vers le centre VMSC ou le registre VLR et a acquis le résultat de la décision de l'indication de refus d'exécution d'une commande de service de domaine par circuits pour l'abonné dans le domaine par paquets, ou
la suppression de données intelligentes d'abonnement dans le centre VMSC ou le registre VLR après que le serveur HSS ou le registre HLR a téléchargé toutes les données d'abonnement de services SS du domaine à commutation de circuits CS vers le centre VMSC ou le registre VLR, a détecté un changement du résultat de la décision et a confirmé que le réseau refuse d'exécuter une commande de service de domaine par circuits pour l'abonné dans le domaine par paquets.

4. Procédé selon la revendication 1, **caractérisé en ce que**, lorsque l'entité d'exécution qui fournit un service du domaine à commutation de circuits CS est située dans le serveur HSS ou le registre HLR, le procédé comprend en outre :
le déclenchement d'un service supplémentaire du domaine à commutation de circuits CS pour l'abonné après qu'un serveur HSS ou un registre HLR a reçu une signalisation de commande d'appel et a acquis le résultat d'une décision indiquant que le réseau refuse d'exécuter une commande de service de domaine par circuits pour l'abonné dans le domaine par paquets lorsque l'abonné est un tiers appelé.

5. Procédé selon la revendication 4, **caractérisé en ce que**, lorsque l'entité d'exécution qui fournit un service du domaine à commutation de circuits CS est située dans le serveur HSS ou le registre HLR, le procédé comprend en outre :
le refus de renvoi de données intelligentes d'abonnement de l'abonné après que le serveur HSS ou le registre HLR a reçu une signalisation de commande d'appel et que le serveur HSS ou le registre HLR a acquis le résultat d'une décision indiquant que le réseau refuse d'exécuter une commande de service de domaine par circuits pour l'abonné dans le domaine par paquets lorsque l'abonné est un tiers appelé.

6. Procédé selon la revendication 1, **caractérisé en ce qu'**il comprend en outre :
la prise d'une décision, par une entité de prise de décision dans le réseau, sur la base des informations de référence acquises et le transfert du résultat de la décision vers l'entité d'exécution qui fournit le service du domaine à commutation de circuits CS, ou
la prise d'une décision, par l'entité d'exécution qui fournit le service du domaine à commutation de circuits CS, sur la base de diverses informations de référence acquises, ainsi que la récupération du résultat correspondant de la décision.

7. Procédé selon la revendication 6, **caractérisé en ce que** les informations de référence comprennent : la préférence de l'abonné, la politique de l'opérateur, l'état d'itinérance de l'abonné, l'emplacement actuel d'un terminal utilisateur, la capacité de traitement intelligent du réseau visité d'un abonné et/ou des informations sur les capacités du terminal utilisateur.

8. Procédé selon la revendication 6, **caractérisé en ce qu'**il comprend en outre :
l'acquisition des informations de référence par l'intermédiaire d'une signalisation d'enregistrement reçue et/ou d'une signalisation de commande d'appel reçue, ou l'acquisition des informations de référence grâce à une interaction avec une entité fournissant des informations dans le réseau.

9. Système permettant de fournir un service de domaine à commutation de circuits, CS, **caractérisé en ce qu'**il comprend :
une unité d'acquisition de résultat de décision, configurée pour acquérir le résultat d'une décision et transférer le résultat de la décision vers une première unité d'exécution qui fournit un service du domaine à commutation de circuits CS, et
une première unité d'exécution qui fournit un service du domaine à commutation de circuits CS, configurée pour déterminer si le résultat acquis comprend une indication de refus de commande de service de circuit de l'abonné dans un domaine par paquets,
et pour fournir à l'abonné un service du domaine à commutation de circuits CS s'il est déterminé que l'indication de refus de commande de service de circuit de l'abonné dans le domaine par paquets est comprise, lorsque la première unité d'exécution qui fournit un service du domaine à commutation de circuits CS est située dans un serveur HSS ou dans un registre HLR, la première unité d'exécution qui fournit un service du domaine à commutation de circuits CS comprenant en outre :
une première sous-unité d'exécution configurée pour :
télécharger des données d'abonnement de services supplémentaires du domaine à commutation de circuits CS d'un terminal utilisateur vers un centre de commutation mobile de réseau visité, VMSC, ou vers un registre d'emplacement visiteur, VLR,
lorsque le serveur HSS ou le registre HLR reçoit une signalisation d'enregistrement de l'abonné et détermine que le résultat d'une décision comprend une indication de refus d'exécution d'une commande de service de domaine par circuits dans le domaine par paquets pour l'utilisateur, ou
télécharger des données d'abonnement à des services supplémentaires du domaine à commutation de circuits CS d'un abonné vers le centre VMSC ou vers le registre VLR, après un enregistrement de l'abonné, lorsque le serveur HSS ou le registre HLR est informé du changement de résultat d'une décision et détermine que le réseau refuse de fournir une commande de service de domaine par circuits à l'abonné dans le domaine par paquets sur la base des informations sur le changement de résultat de la décision.

10. Système selon la revendication 9, **caractérisé en ce que**, lorsque la première unité d'exécution qui fournit un service du domaine à commutation de circuits CS est située dans le serveur HSS ou le registre HLR, la première unité d'exécution qui fournit le service du domaine à commutation de circuits CS comprend en outre :
une sous-unité de traitement de données d'abonnement, configurée pour :
refuser de renvoyer des données intelligentes d'abonnement vers le centre VMSC ou le registre VLR après que le serveur HSS ou le registre HLR a reçu une signalisation d'enregistrement, a téléchargé toutes les données d'abonnement de services supplémentaires du domaine à commutation de circuits CS vers un centre VMSC ou
un registre VLR et a acquis le résultat d'une décision indiquant que le réseau refuse de fournir une commande de service de domaine par circuits à l'abonné dans le domaine par paquets, ou pour
supprimer des données intelligentes d'abonnement dans un centre VMSC ou un registre VLR après que le serveur HSS ou le registre HLR a téléchargé toutes les données d'abonnement de services supplémentaires du domaine à commutation de circuits CS vers un centre VMSC ou un registre VLR, a détecté un changement d'un résultat d'une décision et a déterminé que le réseau refuse de fournir une commande de service de domaine par circuits à l'abonné dans le domaine par paquets sur la base des informations sur le changement de résultat de la décision.

11. Système selon la revendication 9, **caractérisé en ce que**, lorsque la première unité d'exécution qui fournit un service du domaine à commutation de circuits CS est située dans le serveur HSS ou le registre HLR, la première sous-unité d'exécution est en outre configurée pour :
déclencher un service supplémentaire du domaine à commutation de circuits CS pour l'abonné après que le serveur HSS ou le registre HLR a reçu une signalisation de commande d'appel et a détecté que le réseau refuse de fournir des informations de fonctions de continuité de service à un terminal utilisateur sur la base du résultat acquis d'une décision lorsque l'abonné est un tiers appelé.

12. Système selon la revendication 11, **caractérisé en ce que** la sous-unité de traitement de données d'abonnement est en outre configurée pour :
exclure des données intelligentes d'abonnement lorsqu'un abonné est un tiers appelé, et que le serveur HSS ou le registre HLR a reçu une signalisation de commande d'appel et a acquis le résultat d'une décision de ce que le réseau refuse de fournir une commande de service de domaine par circuits à l'abonné dans le domaine par paquets.

13. Système selon la revendication 9, **caractérisé en ce qu'**il comprend en outre :
une première unité de prise de décision, configurée pour prendre une décision en fonction des informations de référence acquises et pour transférer le résultat obtenu de la décision à l'unité d'acquisition de résultat de décision, les informations de référence comprenant : la préférence de l'abonné, la politique de l'opérateur, l'état d'itinérance de l'abonné, l'emplacement actuel d'un terminal utilisateur, la capacité de traitement intelligent du réseau visité d'un abonné et/ou des informations sur les capacités du terminal utilisateur.

14. Système selon la revendication 13, **caractérisé en ce qu'**il comprend en outre :
une unité d'acquisition d'informations de référence, configurée pour acquérir des informations de référence sur la base d'une signalisation d'enregistrement reçue et/ou d'une signalisation de commande d'appel, ou pour acquérir des informations de référence grâce à une interaction avec une entité de fourniture d'informations dans le réseau et pour envoyer les informations de référence acquises vers l'unité de prise de décision.
